# EUROPEAN PATENT SPECIFICATION

(11) **EP 3 640 853 B1**
(45) Date of publication and mention of the grant of the patent: **23.02.2022**
(21) Application number: 18817339.7
(22) Date of filing: 23.05.2018
(51) Int. Cl.: G06K 19/077, G06K 19/02, B23Q 11/00, C09J 7/00, C09J 11/04, C09J 183/00

(54) **RF-TAGGED HAND TOOL AND METHOD FOR ATTACHING RF TAGS TO HAND TOOLS**
RF-ETIKETTIERTES HANDWERKZEUG UND VERFAHREN ZUM BEFESTIGEN VON RF-ETIKETTEN AN HANDWERKZEUGEN
OUTIL MANUEL À ÉTIQUETTE RF ET PROCÉDÉ DE FIXATION D'ÉTIQUETTES RF À DES OUTILS MANUELS

(30) Priority: 14.06.2017 JP 2017116501
(43) Date of publication of application: 22.04.2020
(73) Proprietor: Shin-Etsu Polymer Co., Ltd., Chiyoda-ku Tokyo 101-0041 (JP)
(72) Inventor: KOMORI, Atsushi, Saitama 367-0241 (JP); KATO, Katsuhiko, Saitama 367-0241 (JP)
(74) Representative: Schäfer, Matthias W.
(86) International application number: PCT/JP2018/019855
(87) International publication number: WO 2018/230290

(56) References cited:
- JP-A- 2006 309 690
- JP-A- 2013 037 569
- US-A1- 2006 186 210

## Description

### Technical Field

The present invention relates to an RF-taqqed tool and a method for attaching RF-taqs to tools.

### Background Art

In recent years, use of management systems for conveniently and reliably managing tools with RF (radio frequency) tags and bar codes has been popularized. In particular, on the site of inspection or repair of railroad vehicles or aircrafts where misplacement of tools is strictly prohibited, thorough management of tools is required to prevent misplacement of tools.

For managing tools using RF tags, it is necessary to attach RF tags to tools by some means. General methods for attaching RF tags to existing tools include methods using a pressure-sensitive adhesive tape or a double-sided pressure-sensitive adhesive tape, and methods using a banding band (cable tie). By these methods, RF tags can be very conveniently attached to tools.

In addition to the methods using a tape or a banding band, methods are known in which RF tags are attached to tools using a fixing member such as liquid rubber or a heat-shrinkable tube (see, for example, Patent Literature 1). By these methods, RF tags can be reliably attached to tools with a fixing member touqh and excellent in durability.

### Citation List

### Patent Literature

Patent Literature 1: Japanese Patent Laid-Open No. 2006-309690

US 2006/186210 A1 discloses an RFID tag integrated into a substantially cylindrically-shaped structure intended be attached to an object to be identified through radio frequency identification.

JP 2013 037569 A discloses a method for attaching a sheet-like radio tag to a tool.

### Summary of Invention

### Technical Problem

The methods using a pressure-sensitive adhesive tape or a double-sided pressure-sensitive adhesive tape have a problem that a pressure-sensitive adhesive has poor waterproofness and poor weather resistance, and therefore when a tool with an RF tag attached (hereinafter, referred to as "RF-tagged tool") is used outdoors, the RF tag cannot be fixed on the tool over a long period of time.

The methods using a banding band have a problem that when an RF-tagged tool is used in a harsh environment (e.g. outdoors in the blazing sun or the intense cold), the RF-tagged tool becomes loose due to expansion and contraction or degradation of resin forming the banding band, so that the RF tag cannot be fixed on the tool over a long period of time.

The methods using liquid rubber have a problem that the position of attachment of an RF tag to a tool is easily shifted because the liquid rubber is liquid at the time of attaching the RF tag to the tool. The methods using a heat-shrinkable tube have a problem that it is difficult to attach an RF tag to a position unable to be fitted into a heat-shrinkable tube (e.g. a ring-shaped portion or a portion too thick to enter the tube).

The present invention has been made for solving the above-described problems, and it is an object of the present invention to provide an RF-tagged tool with which RF tags can be fixed to various tools at accurate positions for a long period of time.

### Solution to Problem

(1) An RF-tagged tool according to one embodiment for achieving the object comprises a tool, an RF tag, and a self-adhesive silicone rubber bonding member according to claim 1.
(2) In a disclosed RF-tagged tool according to another example, the self-adhesive silicone rubber bonding member comprises a first bonding member wound around the tool over the RF tag, and a second bonding member disposed between the tool and the RF tag.
(3) In an RF-tagged tool according to another example, the RF tag is fixed to the tool in a state of being enveloped with at least the first bonding member of the first and second bonding members without contacting the tool.
(4) An RF-tagged tool according to another embodiment comprises at least two RF tags different in radio wave transmission direction.
(5) One embodiment of a method for attaching RF tags to tools comprises fixing a tool and an RF tag according to claim 3.
(6) In a method for attaching RF tags to tools according to an embodiment, the fixing comprises sticking the tool and the RF tag together by disposing the uncured self-adhesive silicone rubber sheet between the tool and the RF tag; and winding the uncured self-adhesive silicone rubber sheet around the tool over the RF tag, wherein the sticking and the winding are carried out using one of the uncured self-adhesive silicone rubber sheet.
(8) A method for attaching RF tags to tools according to another embodiment is a method in which at least two RF tags different in radio wave transmission direction are attached to the tool.

### Advantageous Effects of Invention

According to the present invention, it is possible to provide an RF-tagged tool with which RF tags can be fixed to various tools at accurate positions for a long period of time.

### Brief Description of Drawings

[Figure 1] Figure 1 shows a plan view (1a), a side view (1b) and a sectional view along line A1-A1 (1c) of an RF-tagged tool according to a first example.
[Figure 2] Figure 2 shows a method for attaching RF tags to tools according to the first example.
[Figure 3] Figure 3 shows a plan view (3a) and a sectional view along line A2-A2 (3b) of an RF-tagged tool according to a second example.
[Figure 4] Figure 4 shows a method for attaching RF tags to tools according to the second example.
[Figure 5] Figure 5 shows a side view (5a) and a sectional view along line A3-A3 (5b) of an RF-tagged tool according to a third example.
[Figure 6] Figure 6 shows a sectional view for illustrating an RF-tagged tool and a method for attaching RF tags to tools according to a fourth embodiment.

### Reference Signs List

1, 2, 3 ... RF-tagged tool; 10 ... Tool; 20, 22 ... RF tag; 30 ... Self-adhesive silicone rubber bonding member; 30a, 31a, 40a ... Sheet (uncured self-adhesive silicone rubber sheet); 31 ... Self-adhesive silicone rubber bonding member (first bonding member); 40 ... Self-adhesive silicone rubber bonding member (second bonding member)

### Description of Embodiments and Examples

Hereinafter, examples not forming part of the present invention, embodiments of RF-tagged tools and methods for attaching RF tags to tools according to the present invention will be described with reference to drawings. The embodiments described below do not limit the claimed invention. All of elements and combinations thereof as described in the embodiments are not necessarily essential for solution by the present invention. In the embodiments, constituent elements whose basic configurations and features are the same are given the same symbol throughout the embodiments, and description thereof is sometimes omitted.

### (First example)

### 1. FR-tagged tool

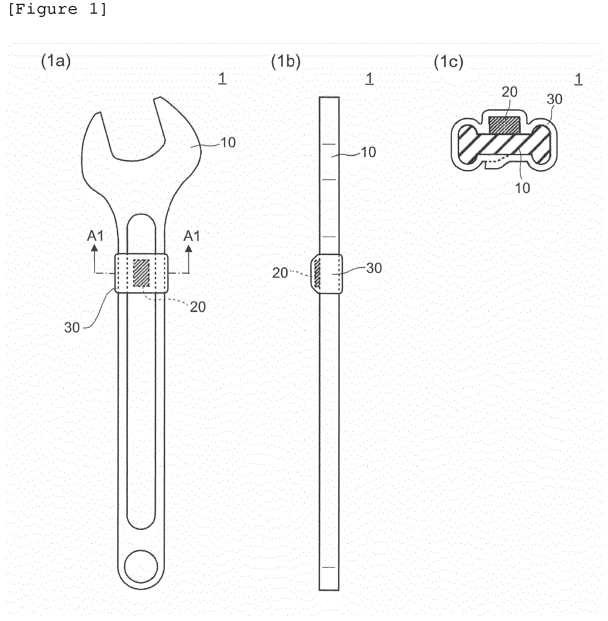

Figure 1 shows a plan view (1a), a side view (1b) and a sectional view along line A1-A1 (1c) of an RF-tagged tool according to a first example.

An RF-tagged tool 1 according to the first example includes a tool 10, an RF tag 20 and a self-adhesive silicone rubber bonding member 30 as shown in Figure 1.

In this example, the tool 10 is a single-ended wrench, but the tool 10 is not limited to a single-ended wrench. The tool 10 is not particularly limited as long as it is a tool to be used for processing or assembling mechanical components, and examples thereof include Phillips-head screwdrivers, flathead screwdrivers, hammers, pliers, pincers, double-ended wrenches, monkey wrenches, box wrenches, socket wrenches, torque wrenches, pipe wrenches, saws, drills, electric drills, nippers, chain saws, bolt clippers and small gas burners. The tool 10 is preferably a tool apt to be misplaced, more preferably a portable small tool. The tool 10 may be an unpowered tool (manual tool) or a powered tool (electric motor, internal combustion engine or the like).

The RF tag 20 is intended to manage the RF-tagged tool 1. The RF tag is an abbreviated expression of "radio frequency tag". The RF tag is sometimes called by another name such as "electronic tag", "IC tag", "wireless tag" or "RFID tag". The "RF tag" is one that is suitably used with a corresponding reader (dedicated receiver as well as PC or smartphone having a function of a reader, or the like), and can transmit or transmit and receive data between itself and a reader in a non-contact manner. Such noncontact transmission or transmission and reception is performed preferably with radio waves. The reader optionally may also serve as a writer (writing). The RF tag 20 is preferably one obtained by integrating components such as a control circuit including an IC chip, a memory and an antenna.

The RF tag 20 can include any of a passive tag which can be operated using radio waves from a reader, etc. as energy, and does not include a battery; an active tag which includes a battery, and emits radio waves by its own power; and a semi-active tag which includes a battery but starts communication with a host system in a passive mode. The RF tag 20 may be a tag which can be driven in either an electromagnetic induction mode or a radio wave mode. The shape of the RF tag 20 may be of any type such as box type (i.e. rectangular solid), spherical type, egg type, card type, coin type, stick type or label type.

The self-adhesive silicone rubber bonding member 30 is one obtained by curing an uncured self-adhesive silicone rubber sheet 30a. The self-adhesive silicone rubber will be described in detail later. Here, the self-adhesive silicone rubber bonding member 30 has a thin sheet shape during attachment of the RF tag 20 to the tool 10, but the sheet shape is not necessarily maintained even after curing. The thickness of the self-adhesive silicone rubber bonding member 30 may be increased by stacking a plurality of sheets of the member during the attachment, or made uneven depending on irregularities on the surfaces of the RF tag 20 and the tool 10, and the like.

The self-adhesive silicone rubber bonding member 30 covers at least part of the RF tag 20 (the entire surface except the bottom surface in the first example), and itself is fixed to the tool 10. Preferably, the entire surface, except the bottom surface, of the RF tag 20 is covered with the self-adhesive silicone rubber bonding member 30, but only a surface opposite to the tool 10 (upper surface) may be covered with the self-adhesive silicone rubber bonding member 30. As shown in Figure 1 (1c), the self-adhesive silicone rubber bonding member 30 is wound around the tool 10 by a length slightly larger than the length of one round.

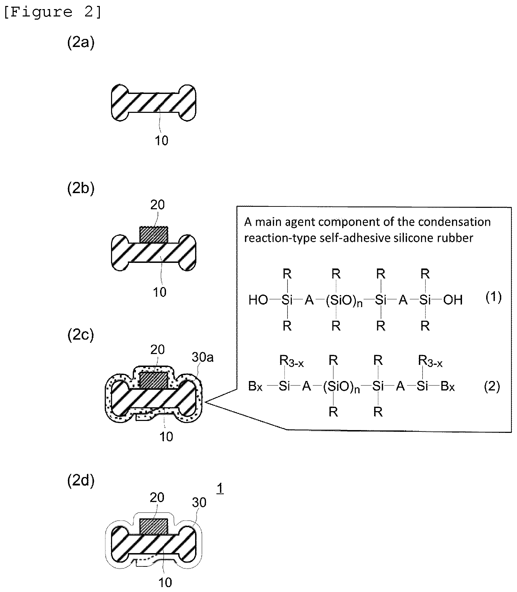

In Figure 1 (1c), the self-adhesive silicone rubber bonding member 30 is illustrated to be significantly stepped in the vicinity of an end portion thereof, but this is intended to make it more easily understood that the self-adhesive silicone rubber bonding member 30 overlaps itself. The self-adhesive silicone rubber bonding member 30 is relatively thin. This is because the uncured self-adhesive silicone rubber sheet, from which the self-adhesive silicone rubber bonding member 30 is formed, is thin and rich in plasticity. Thus, it is possible to avoid a situation in which the self-adhesive silicone rubber bonding member 30 is significantly stepped in the vicinity of an end portion thereof. The same applies to Figures 2 (2d), 3 (3b), 4 (4e) and 5 (5b) .

Preferably, the self-adhesive silicone rubber bonding member 30 transmits at least part of visible light, so that the RF tag 20 is visible through the self-adhesive silicone rubber bonding member 30. The self-adhesive silicone rubber bonding member 30 is preferably transparent or translucent for "transmitting part of visible light".

The self-adhesive silicone rubber bonding member 30 may be colored. Here, a color well visible in the night (yellow or the like) can be employed. When a plurality of RF-tagged tools 1 are present, the self-adhesive silicone rubber bonding member 30 having a different color according to the type or the location of the tool 10, or the like may be used. The coloring means is not particularly limited, and coloring can be performed by incorporating a dye or a pigment in the self-adhesive silicone rubber.

The self-adhesive silicone rubber will now be described. The "self-adhesive silicone rubber" is a solvent-free silicone-based adhesive, and has high adhesive strength as well as thermal stability, weather resistance, good water resistance and excellent flexibility. The uncured self-adhesive silicone rubber (before curing) can retain an independent shape, and can be deformed under a pressing force (solid with plasticity). Thus, the uncured self-adhesive silicone rubber sheet can be deformed depending on irregularities or a curved surface of a disposition area, and brought into close contact with the disposition area, and has high adhesive strength.

The Williams plasticity number of the uncured self-adhesive silicone rubber sheet at 25°C is preferably within the range of 50 to 500. The Williams plasticity number is measured in accordance with the measurement method specified in JIS K 6249, "Method for Testing Uncured and Cured Silicone Rubbers" using a parallel plate plastometer (Williams Plastometer).

The uncured self-adhesive silicone rubber sheet is, for example, a semi-solid (also referred to as "semicured") moisture-curable composition layer. The component thereof is not particularly limited, and is, for example, a material formed of a condensation reaction-type silicone-based or modified silicone-based composition. Instead of the uncured self-adhesive silicone rubber sheet, a semi-solid sheet using a curable composition other than a silicone-based or modified silicone-based composition, such as a moisture-curable urethane rubber composition, can be used. The modified silicone-based composition is, for example, a composition obtained by modifying the molecular terminal of a polyether-based oligomer with silicone. Like a silicone-based sealing material, a modified silicone-based sealing material is caused to undergo curing reaction by moisture. The condensation reaction-type silicone-based or modified silicone-based composition may be referred to as a one-part condensation-curable silicone sealant or a one-part condensation-type modified silicone sealant. The sealant absorbs moisture, and undergoes deoximation reaction, dealcoholization reaction, deacetylation reaction or the like to be cured. The term "self-adhesive silicone rubber bonding member" may be replaced with the term "silicone rubber", and the term "self-adhesive silicone rubber sheet" may be replaced with the term "uncured silicone rubber composition sheet".

Hereinafter, self-adhesive silicone rubber suitably usable will be described in detail.

### (1) Condensation reaction-type self-adhesive silicone rubber

Condensation reaction-type self-adhesive silicone rubber is mainly formed of the following components.

### (1-1) Organopolysiloxane

This component is a main agent component of the condensation reaction-type self-adhesive silicone rubber, which is a diorganopolysiloxane represented by the following chemical formula (1) or (2).

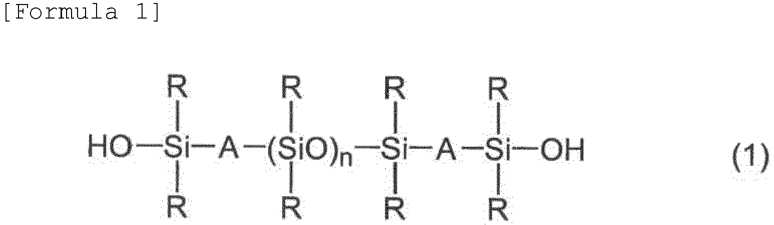

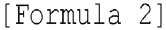

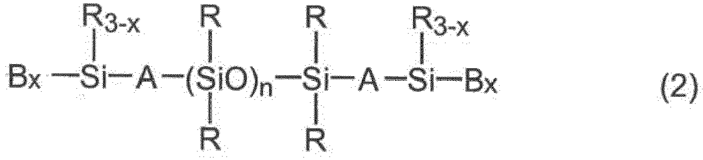

In the chemical formulae (1) and (2), R is a monovalent hydrocarbon group. R may be one or more hydrocarbon groups selected from alkyl groups (methyl group, ethyl group, propyl group, butyl group, 2-ethylbutyl group, octyl group and the like), cycloalkyl groups (cyclohexyl group, cyclopentyl group and the like), alkenyl groups (vinyl group, propenyl group, butenyl group, heptenyl group, hexenyl group, allyl group and the like), aryl groups (phenyl group, tolyl group, xylyl group, naphthyl group, diphenyl group and the like), aralkyl groups (benzyl group, phenylethyl group and the like), and groups formed by replacing at least some of hydrogen atoms bonded to carbon atoms of each of the above hydrocarbon groups with halogens, cyano groups or the like (chloromethyl group, trifluoropropyl group, 2-cyanoethyl group, 3-cyanopropyl group and the like). The number of carbon atoms in R is preferably 1 to 12, further preferably 1 to 10.

In the chemical formulae (1) and (2), A is an oxygen atom, or a polymethylene group (including a methylene group) represented by -(CH₂)ₘ- (m is 1 to 8). A is preferably an oxygen atom or an ethylene group.

In the chemical formulae (1) and (2), n is any number at which the dynamic viscosity of the component (1-1) at 25°C is within the range of 100 to 1000000 cm²/s. The dynamic viscosity is further preferably within the range of 500 to 500000 cm²/s.

In the chemical formulae (1) and (2), B is a hydrolysable group. Examples of the group B include alkoxy groups (methoxy group, ethoxy group, propoxy group, butoxy group and the like), ketoxime groups (dimethylketoxime group, methylethylketoxime group and the like), acyloxy groups (acetoxy group and the like) and alkenyloxy groups (isopropenyloxy group, isobutenyloxy group and the like). In the chemical formulae (1) and (2), x is 2 or 3.

The component (1-1) can be produced by a known method (e.g. equilibrium reaction method using a cyclic siloxane or linear oligomer and an acid catalyst or base catalyst).

When a branched structure is introduced into the diorganopolysiloxane which is the component (1-1), it is possible to use as an ordinary method a method in which a silane or siloxane containing at least one of a SiO_{3/2} unit and a SiO_{4/2} unit is added during polymerization in such a manner that the diorganopolysiloxane does not turn into a gel. It is preferable to use the component (1-1) after removing low-molecular siloxanes by washing or the like for reducing contamination.

### (1-2) Crosslinker

As a crosslinker, a silane having two or more, preferably three or more hydrolysable groups per molecule, or a partially hydrolyzed and condensed product of the silane is used. Examples of the hydrolysable group include alkoxy groups (methoxy group, ethoxy group, butoxy group and the like), ketoxime groups (dimethylketoxime group, methylethylketoxime group and the like), acyloxy groups (acetoxy group and the like), alkenyloxy groups (isopropenyloxy group, isobutenyloxy group and the like), amino groups (N-butylamino group, N,N-diethylamino group and the like) and amide groups (N-methylacetamide group and the like). Among them, alkoxy groups, ketoxime groups, acyloxy groups and alkenyloxy groups are preferable. The amount of the crosslinker blended is preferably within the range of 1 to 50 parts by mass, further preferably within the range of 2 to 30 parts by mass, furthermore preferably within the range of 5 to 20 parts by mass, based on 100 parts by mass of the component (1-1).

### (1-3) Curing catalyst

A curing catalyst is not essential, but use of a curing catalyst can accelerate curing of the self-adhesive silicone rubber. Examples of the curing catalyst include alkyltin ester compounds (dibutyltin diacetate, dibutyltin dilaurate, dibutyltin dioctoate and the like), titanic acid esters or titanium chelate compounds (tetraisopropoxy titanium, tetra-n-butoxy titanium, tetrakis(2-ethylhexoxy)titanium, dipropoxybis(acetylacetona)titanium, titanium isopropoxyoctylene glycol and the like), other appropriate organometal compounds (zinc naphthenate, zinc stearate, zinc 2-ethyloctoate, iron 2-ethylhexoate, cobalt 2-ethylhexoate, manganese 2-ethylhexoate, cobalt naphthenate, alkoxyaluminum compounds and the like), aminoalkyl group-substituted alkoxysilanes (3-aminopropyltriethoxysilane, N-β(aminoethyl)γ-aminopropyltrimethoxysilane and the like), amine compounds or salts thereof (hexylamine, dodecylamine phosphate and the like), quaternary ammonium salts (benzyltriethylammonium acetate and the like), lower fatty acid salts of alkali metals (lower fatty acid salts of alkali metals of potassium acetate, sodium acetate, lithium oxalate and the like), dialkylhydroxylamines (dimethylhydroxylamine, diethylhydroxylamine and the like), and silanes or siloxanes having a guanidyl group (tetramethylguanidylpropyltrimethoxysilane, tetramethylguanidylpropylmethyldimethoxysilane, tetramethylguanidylpropyltris(trimethylsiloxy)silane and the like). One of these compounds, or a mixture of two or more of these compounds may be used. The amount of the curing catalyst blended is preferably within the range of 0 to 20 parts by mass, further preferably within the range of 0.001 to 10 parts by mass, furthermore preferably within the range of 0.01 to 5 parts by mass, based on 100 parts by mass of the component (1-1).

### (1-4) Filler

A filler is not essential, but can be suitably used for reinforcement or the like. Examples of the filler include reinforcing agents (fumed silica, precipitated silica, such silica whose surface has been hydrophobized with an organosilicon compound, quartz powder, talc, zeolite, bentonite and the like), fibrous fillers (asbestos, glass fibers, organic fibers and the like), and basic fillers (calcium carbonate, zinc carbonate, zinc oxide, magnesium oxide, celite and the like). Among them, silica, calcium carbonate and zeolite are preferably used, and fumed silica having a hydrophobized surface, and calcium carbonate are further preferably used. The amount of the filler blended can be selected according to the purpose and the type of filler, but is within the range of 1 to 90% by volume, preferably within the range of 5 to 60% by volume, based on the amount of the component (1-1).

### (1-5) Adhesiveness-imparting component

An adhesiveness-imparting component is not essential, but can be suitably used. Examples of the adhesiveness-imparting component include amino group-containing organoalkoxysilanes (y-aminopropyltrimethoxysilane, γ-(2-aminoethyl)aminopropyltrimethoxysilane and the like), epoxy group-containing organoalkoxysilanes (y-glycidoxypropyltrimethoxysilane and the like), mercapto-containing organoalkoxysilanes (y-mercapto propyltrimethoxysilane and the like), and reaction mixtures of amino group-containing organoalkoxysilanes and epoxy group-containing organoalkoxysilanes. The amount of the adhesiveness-imparting component blended is preferably within the range of 0.1 to 5 parts by mass based on 100 parts by mass of the component (1-1).

### (2) Addition-curable self-adhesive silicone rubber

Addition-curable self-adhesive silicone rubber is mainly formed of the following components.

### (2-1) Organopolysiloxane

An organopolysiloxane is a main agent of the addition-curable self-adhesive silicone rubber, and has an average of two or more alkenyl groups per molecule. Examples of the alkenyl group include vinyl groups, allyl groups, butenyl groups, pentenyl groups, hexenyl groups and heptenyl groups. Among them, vinyl groups are preferably used. Examples of the organic group bonded to silicon atoms, other than alkenyl groups, in this component include alkyl groups (methyl group, ethyl group, propyl group, butyl group, pentyl group, hexyl group and the like), aryl groups (phenyl group, tolyl group, xylyl group and the like), and alkyl halide groups (3-chloropropyl group, 3,3,3-trifluoropropyl group and the like). Among them, a methyl group is preferably used. Examples of the molecular structure of this component include straight-chain structures, partially branched straight-chain structures, branched-chain structures, network structures and dendritic structures. The viscosity of this component at 25°C is preferably 100000 mPa●s or more, further preferably 1000000 mPa●s or more.

As the organopolysiloxane of this component, for example, polydimethylsiloxanes blocked with a dimethylvinylsiloxy group at both terminals of the molecular chain, copolymers of dimethylsiloxanes blocked with a dimethylvinylsiloxy group at both terminals of the molecular chain and methylvinylsiloxanes, copolymers of dimethylsiloxanes blocked with a trimethylsiloxy group at both terminals of the molecular chain and methylvinylsiloxanes, organopolysiloxanes including a siloxane unit represented by (CH₃)₃SiO_{1/2}, a siloxane unit represented by (CH₃)₂(CH₂=CH)SiO_{1/2} and a siloxane unit represented by SiO_{4/2}, such organopolysiloxanes in which some of methyl groups are replaced with a substituent selected from alkyl groups (ethyl group, propyl group and the like), aryl groups (phenyl group, tolyl group and the like) and alkyl halide groups (3,3,3-trifluoropropyl group and the like), such organopolysiloxanes in which some of vinyl groups are replaced with an alkenyl group (allyl group, propenyl group or the like), and mixtures of two or more of these organopolysiloxanes can be used.

### (2-2) Hydrogenated organopolysiloxane

A hydrogenated organopolysiloxane acts as a curing agent for the addition-curable self-adhesive silicone rubber, and has an average of two or more hydrogens bonded to silicon atoms per molecule. Examples of the organic group bonded to silicon in this component include alkyl groups (methyl group, ethyl group, propyl group, butyl group, pentyl group, hexyl group and the like), aryl groups (phenyl group, tolyl group, xylyl group and the like), and alkyl halide groups (3-chloropropyl group, 3,3,3-trifluoropropyl group and the like). Among them, a methyl group is preferably used. Examples of the molecular structure of this component include straight-chain structures, partially branched straight-chain structures, branched-chain structures, network structures and dendritic structures. The viscosity of this component at 25°C is not limited, but is preferably within the range of 1 to 1000000 mPa●s, further preferably within the range of 1 to 10000 mPa●s.

As the hydrogenated organopolysiloxane of this component, for example, polydimethylsiloxanes blocked with a dimethylhydrogensiloxy group at both terminals of the molecular chain, polymethylhydrogensiloxanes blocked with a trimethylsiloxy group at both terminals of the molecular chain, copolymers of dimethylsiloxanes blocked with a trimethylsiloxy at both terminals of the molecular chain and methylhydrogensiloxanes, cyclic polymethylhydrogensiloxanes, organopolysiloxanes including a siloxane unit represented by (CH₃)₂HSiO_{1/2} and a siloxane unit represented by SiO_{4/2}, such organopolysiloxanes in which some of methyl groups are replaced with a alkyl group (ethyl group, propyl group or the like), an aryl group (phenyl group, tolyl group or the like) or an alkyl halide group (3,3,3-trifluoropropyl group or the like), and mixtures of two or more of these organopolysiloxanes can be used. Among them, mixtures of organopolysiloxanes, which have hydrogen atoms bonded to silicon atoms, only at both terminals of the molecular chain and organopolysiloxanes, which have a silicon atom bond, on the side chain of the molecular chain are preferably used for enhancing mechanical properties (especially elongation) of cured products to be obtained.

The content of this component in the addition-curable self-adhesive silicone rubber is such that the molar ratio of hydrogen atoms bonded to silicon atoms in this component to alkenyl groups in the component (2-1) is within the range of 0.01 to 20, preferably within the range of 0.1 to 10, further preferably within the range of 0.1 to 5. The reason why the content is set within the above-described range is that when the content of this component is not below the lower limit of the range, the self-adhesive silicone rubber tends to be sufficiently cured, and when the content of this component is not above the upper limit of the range, the cured self-adhesive silicone rubber tends to have higher mechanical properties. When a mixture of an organopolysiloxane, which has hydrogen atoms bonded to silicon atoms, only at both terminals of the molecular chain and an organopolysiloxane, which has a silicon atom bond, on the side chain of the molecular chain is used as this component, the content of the former organopolysiloxane is such that the molar ratio of hydrogen atoms bonded to silicon atoms in this component to alkenyl groups in the component (2-1) is preferably within the range of 0.01 to 10, further preferably within the range of 0.1 to 10, furthermore preferably within the range of 0.1 to 5. The content of the latter organopolysiloxane is such that the molar ratio of hydrogen atoms bonded to silicon atoms in this component to alkenyl groups in the component (2-1) is preferably within the range of 0.5 to 20, further preferably within the range of 0.5 to 10, furthermore preferably within the range of 0.5 to 5.

### (2-3) Curing catalyst

A curing catalyst is not essential, and preferred examples thereof include platinum-based catalysts for hydrosilylation reaction. Examples of the platinum-based catalyst for hydrosilylation reaction include platinum fine powder, platinum black, platinic chloride, alcohol-modified platinic chloride, complexes of platinum and diketone, complexes of platinic chloride and olefins, complexes of platinum chloride and alkenylsiloxanes, and such catalysts supported on carriers (alumina, silica, carbon black and the like). Among them, complexes of platinic chloride and alkenylsiloxanes are preferably used because of high catalytic activity. Complexes of platinic chloride and divinyltetramethyldisiloxane are further preferably used. The amount of this component blended is preferably within the range of 1 to 1000 parts by mass, further preferably within the range of 1 to 100 parts by mass, in terms of platinum metal atoms, based on 1,000,000 parts by mass of the component (2-1).

### (2-4) Filler

It is preferable to add a filler for enhancing the mechanical strength of the addition-curable self-adhesive silicone rubber, and the filler may be a known compound that is commonly used for formulation of silicone rubber. Examples of this component include fumed silica, precipitated silica, fired silica, ground quartz, and such silica powder whose surface has been treated with an organosilicon compound (organoalkoxysilane, organohalosilane, organosilazane or the like). It is preferable that in particular, silica powder having a BET specific surface area of 50 m²/g or more be used as this component for sufficiently enhancing the mechanical strength of the cured self-adhesive silicone rubber.

Addition of this component is optional in the addition-curable self-adhesive silicone rubber, but for enhancing the mechanical strength of the cured self-adhesive silicone rubber, the amount of this component blended is preferably within the range of 1 to 1000 parts by mass, further preferably within the range of 1 to 400 parts by mass, based on 100 parts by mass of the component (2-1). Further, the addition-curable self-adhesive silicone rubber may contain other optional components, for example inorganic and organic fillers such as fumed titanium oxide, diatomaceous earth, iron oxide, aluminum oxide, aluminosilicate, calcium carbonate, zinc oxide and aluminum hydroxide. The addition-curable self-adhesive silicone rubber may contain such fillers whose surfaces have been treated with the organosilicon compound. The amount of the filler blended can be selected according to the purpose and the type of filler, but is within the range of 1 to 90% by volume, preferably within the range of 5 to 60% by volume, based on the amount of the component (2-1).

### (2-5) Adhesiveness-imparting component

This component is not essential, but can be suitably used for imparting adhesiveness to the addition-curable self-adhesive silicone rubber and enhancing the adhesiveness so that the rubber functions as an adhesive. Examples of this component include silane coupling agents and partial hydrolysates thereof (methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis(trimethoxysilyl)propane, bis(trimethoxysilyl)hexane and the like), organic compounds having "an epoxy group, an acid anhydride group or an α-cyanoacrylic group", siloxane compounds having "an epoxy group, an acid anhydride group or an α-cyanoacrylic group", organic compounds or siloxane compounds having both "an epoxy group, an acid anhydride group or an α-cyanoacrylic group" and an alkoxysilyl group, titanium compounds (tetraethyl titanate, tetrapropyl titanate, tetrabutyl titanate, tetra(2-ethylhexyl) titanate, titanium ethylacetonate, titanium acetylacetonate and the like), aluminum compounds (ethylacetoacetate aluminum diisopropylate, aluminum tris(ethylacetoacetate), alkylacetoacetate aluminum diisopropylates, aluminum tris(acetylacetonate), aluminum monoacetylacetonate-bis(ethylacetoacetate) and the like), and zirconium compounds (zirconium acetylacetonate, zirconium butoxyacetylacetonate, zirconium bis-acetylacetonate, zirconium ethylacetoacetate and the like). Among the siloxane compounds, those having a lower aliphatic unsaturated group such as an alkenyl group, an acryloyl group or a methacryloyl group or those having both the lower aliphatic unsaturated group and a hydrosilyl group can be expected to effectively contribute to enhancement of adhesiveness. The content of the adhesiveness-imparting component is not particularly limited, but is preferably within the range of 0.01 to 10 parts by mass based on 100 parts by mass of the component (2-1).

Further, it is preferable that the addition-curable self-adhesive silicone rubber contain acetylene-based compounds (3-methyl-1-buten-3-ol, 3,5-dimethyl-1-hexyn-3-ol, 3-phenyl-1-butyn-3-ol and the like), enyne compounds (3-methyl-3-penten-1-yne, 3,5-dimethyl-3-hexen-1-yne and the like), organosiloxane compounds having vinyl groups in an amount of 5% by mass or more per molecule (1,3,5,7-tetramethyl-1,3,5,7-tetravinylcyclotetrasiloxane, 1,3,5,7-tetramethyl-1,3,5,7-tetrahexenylcyclotetrasiloxane, methylvinylsiloxanes blocked with a silanol group at both terminals of the molecular chain, copolymers of methylvinylsiloxanes blocked with a silanol group at both terminals of the molecular chain and dimethylsiloxanes, and the like), or other curing controlling agents (triazoles such as benzotriazole, phosphines, mercaptans, hydrazines and the like) for adjusting the curability of the rubber. The content of these compounds is not limited, but is preferably within the range of 0.001 to 5 parts by mass based on 100 parts by mass of the component (2-1).

The method for preparing the addition-curable self-adhesive silicone rubber is not limited, and the addition-curable self-adhesive silicone rubber can be prepared by mixing other optional components if necessary, but it is preferable that to a base compound prepared by heating and mixing the components (2-1) and (2-3) beforehand, other components be added. When adding the other optional components, these components may be added at the time of preparing the base compound, and if the other optional components are degenerated by heating and mixing, these components may be added at the time of adding the components (2-2) and (2-4). Further, at the time of preparing the base compound, the organic silicon compound may be added to treat the surface of the component (2-3) in situ.

The uncured self-adhesive silicone rubber sheet is obtained by adjusting the condensation reaction-type self-adhesive silicone rubber or addition reaction-type self-adhesive silicone rubber to form the rubber into a sheet shape.

### 2. Method for attaching RF tag to tool

A method for attaching RF tags to tools according to the first example will now be described.

Figure 2 shows a method for attaching RF tags to tools according to the first example. Each view in Figure 2 is a sectional view corresponding to Figure 1 (1c) .

The method for attaching RF tags to tools according to this example is a method in which at least part (the entire surface except the bottom surface in the first example) of the RF tag 20 disposed on the tool 10 is covered with the uncured self-adhesive silicone rubber sheet 30a, and the sheet 30a is cured into the self-adhesive silicone rubber bonding member 30 to fix the RF tag 20 to the tool 10. Herein, the "sheet shape" includes shapes such as a tape shape, a round braid shape and a film shape (i.e. thin-film shapes in general). The thickness of the uncured self-adhesive silicone rubber sheet 30a (hereinafter, referred to simply as "sheet 30a") is preferably, for example, within the range of 0.2 to 10.0 mm, further preferably within the range of 0.7 to 2.0 mm.

The "method for attaching RF tags to tools" can also be construed as a method for fixing the RF tag 20 to the tool 10 to produce the RF-tagged tool 1, and therefore may be referred to as a "method for producing an RF-tagged tool". The method for attaching RF tags to tools (or the method for producing an RF-tagged tool) according to this example includes a fixing step of fixing the tool 10 and the RF tag 20 by disposing the RF tag 20 on the tool 10 and then covering at least part of the RF tag 20 with the sheet 30a; and a curing step of curing the sheet 30a to form the self-adhesive silicone rubber bonding member 30.

Herein, the form of the " tool 1 with RF tag 20" is construed as including both a form in which the RF tag 20 is disposed to be in direct contact with the tool 10 (i.e. directly contacts the tool 10) and a form in which the RF tag 20 is disposed on the tool 10 with a member (e.g. a sheet 30a different from the sheet 30a wound around the tool 10 over the RF tag 20) interposed therebetween.

Hereinafter, the method for attaching RF tags to tools according to this example will be described in detail with reference to Figure 2 ((2a) to (2d)).

First, the tool 10 is prepared (see Figure 2 (2a)). Here, it is preferable that contaminants, moisture, oil and the like present on a portion (adherend) of a surface of the tool 10, where the sheet 30a is disposed, be removed beforehand. The removal can be performed by, for example, wiping off the contaminants etc. with a wiping material (cloth, absorbent cotton etc.) containing a cleaning agent (alcohol etc.).

Next, the RF tag 20 is disposed at a desired position on the tool 10 (see Figure 2 (2b)). The position where the RF tag 20 is disposed is preferably a position where handling of the tool 10 is not hindered, and reading of the RF tag 20 is not interrupted. The position where handling of the tool 10 is not hindered means a position hardly touchable with a hand in handling of the tool 10, and a position other than a working portion of the tool 10 (portion which contacts a screw in the case of a screwdriver).

Next, at least part of the RF tag 20 disposed on the tool 10 (the entire surface except the bottom surface in this example) is covered with the sheet 30a to fix the RF tag 20 to the tool 10 (fixing step: see Figure 2 (2c)). From the viewpoint of stability in attachment of the RF tag 20, it is preferable that a surface other than the contact surface between the RF tag 20 and the tool 10 (bottom surface) be covered with the sheet 30a. The sheet 30a can be formed into an appropriate shape with scissors etc. It is preferable to wind the sheet 30a around the periphery of the tool 10 by a length larger than the length of one round in the fixing step. It is preferable that at the time of covering the RF tag 20 with sheet 30a, generation of voids between the tool 10 and the RF tag 20 and the sheet 30a be prevented wherever possible by, for example, applying a pressing force onto the sheet 30a to adjust the shape.

Next, the RF tag 20 is firmly attached to the tool 10 by curing the sheet 30a to form the self-adhesive silicone rubber bonding member 30 (curing step: see Figure 2 (2d)). The curing is performed by leaving (aging) the sheet at normal temperature (15 to 35°C), but may be performed by a means of heating the sheet to a temperature higher than normal temperature. The condensation reaction-type self-adhesive silicone rubber can be cured at a temperature lower than normal temperature because it reacts with moisture in air.

Through the above steps, the RF tag 20 is attached to the tool 10 to complete the RF-tagged tool 1.

### 3. Characteristic effect of first example

According to this example, the sheet 30a is formed of self-adhesive silicone rubber, therefore can be handled like a tape at the time of use, and turns into an adhesive body excellent in waterproofness and weather resistance after curing. Since the silicone rubber is excellent in waterproofness and weather resistance, the RF tag 20 can be fixed on the tool 10 over a long period of time when the RF-tagged tool 1 is used outdoors. The sheet 30a can be bent or otherwise deformed freely at the time of use, and therefore used independently of the shapes of the RF tag 20 and the tool 10.

The sheet 30a is a solid substance having plasticity, and therefore hardly causes a shift in position of attachment of the RF tag 20, attachment to an intended position or the like, and is excellent in fixation operability as compared to a case where a liquid adhesive is used.

Preferably, the sheet 30a, when cured, transmits at least part of visible light, so that the RF tag 20 is visible through the self-adhesive silicone rubber bonding member 30. Thus, the position of the RF tag 20, a control number written on the RF tag 20, etc. can be easily visually confirmed.

The sheet 30a may be capable of forming the colored self-adhesive silicone rubber bonding member 30 after curing. In this case, the visibility and discrimination of the RF-tagged tool 1 itself can be enhanced with the aid of the color of the self-adhesive silicone rubber bonding member 30.

### (Second example)

Next, a second example will be described. In the second example, configurations or steps identical to those in the first example are omitted as appropriate, and differences between the second example and the first example are mainly described.

### 1. RF-tagged tool

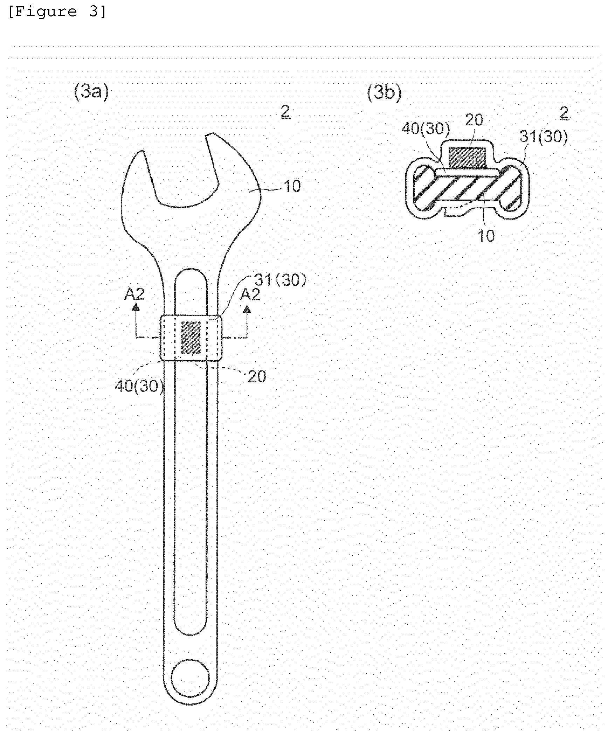

Figure 3 shows a plan view (3a) and a sectional view along line A2-A2 (3b) of an RF-tagged tool according to the second example.

An RF-tagged tool 2 according to the second example basically has the same configuration as that of the RF-tagged tool 1 according to the first example, but is different from the RF-tagged tool 1 according to the first example in that an RF tag 20 is fixed to a tool 10 with a self-adhesive silicone rubber bonding member 30 interposed therebetween.

The self-adhesive silicone rubber bonding member 30 bonding the RF tag 20 and the tool 10 together in the RF-tagged tool 2 includes a first bonding member 31 wound around the tool 10 over the RF tag 20, and a second bonding member 40 disposed between the tool 10 and the RF tag 20.

### 2. Method for attaching RF tag to tool

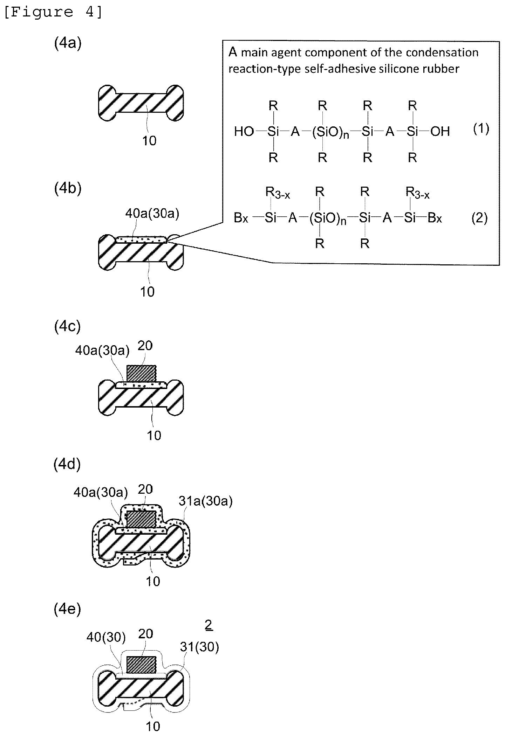

Figure 4 shows a method for attaching RF tags to tools according to the second example.

The method for attaching RF tags to tools according to the second example is basically the same as the method for attaching RF tags to tools according to the first example, but is different from the method for attaching RF tags to tools according to the first example in that an uncured self-adhesive silicone rubber sheet 40a (hereinafter, referred to simply as "sheet 40a") which turns into a second bonding member 40 after curing is disposed between a surface of the tool 10 and the RF tag 20.

The method for attaching RF tags to tools according to this example includes a fixing step of fixing the tool 10 and the RF tag 20 by covering at least part of the RF tag 20 with a sheet 30a; and a curing step of curing the sheet 30a to form the self-adhesive silicone rubber bonding member 30. The fixing step includes a sticking step of sticking the tool 10 and the RF tag 20 together by disposing the sheet 40a between the tool 10 and the RF tag 20; and a winding step of winding a sheet 31a around the tool 10 over the RF tag 20, the sheet 31a being different from the sheet 40a used in the sticking step. The sheet 31a turns into the first bonding member 31 (one form of the self-adhesive silicone rubber bonding member 30) after curing. The sheet 40a turns into the second bonding member 40 (another form of the self-adhesive silicone rubber bonding member 30) after curing. Hereinafter, the method for attaching RF tags to tools according to the second example will be described in detail.

First, the tool 10 is prepared (see Figure 4 (4a)). This step is the same as in the first example, and therefore is not described here.

Next, the sheet 40a is disposed on a surface of the tool 10 (see Figure 4 (4b)).

Next, the RF tag 20 is disposed and stuck on the sheet 40a (sticking step: see Figure 4 (4c)). The sticking step forms part of the fixing step of fixing the RF tag 20 to the tool 10.

Next, at least part (the entire surface except the bottom surface in the second example) of the RF tag 20 disposed on the tool 10 is covered with the sheet 31a (winding step: see Figure 4 (4d)). The winding step is the same as in the fixing step in the first example, and therefore is not described here.

Next, the sheets 31a and 40a are cured to fixedly attach the RF tag 20 to the tool 10 (curing step: see Figure 4 (4e)). The curing method is the same as in the first example, and therefore is not described here.

Through the above steps, the RF tag 20 can be attached to the tool 10 to complete the RF-tagged tool 2. The RF tag 20 may be an on-metal tag or a non-on-metal tag. The on-metal tag has a resin mold provided on the outer periphery of the RF tag 20 for coping with the problem that the metallic tool 10 reflects weak radio waves emitted from the RF tag 20. However, there is a disadvantage that a mold is required in preparation of an on-metal tag, leading to increase in size of the tag and associated cost increase. Thus, when the second bonding member 40 is interposed between the tool 10 and the RF tag 20, it is preferable to use a non-on-metal tag free from the above-described disadvantage. Since the second bonding member 40 is interposed between the tool 10 and the RF tag 20, it is possible to reduce the problem that radio waves from the RF tag 20 are reflected by the tool 10. The same applies to a fourth embodiment.

### 3. Characteristic effect of second example

According to this example, it is possible to obtain, in addition to the foregoing effect of the first example, an effect of enabling suppression of a shift in position of the RF tag 20 and enabling fixation for a longer period of time because the RF tag 20 can be more reliably fixed to the tool 10. In particular, even when there are many irregularities on the surface of the tool 10, the RF tag 20 can be stably fixed to the tool 10.

### (Third example)

Next, a third example will be described. In the third example, configurations or steps identical to those in the foregoing examples are omitted as appropriate, and differences between the third example and the foregoing examples are mainly described.

### 1. RF-tagged tool

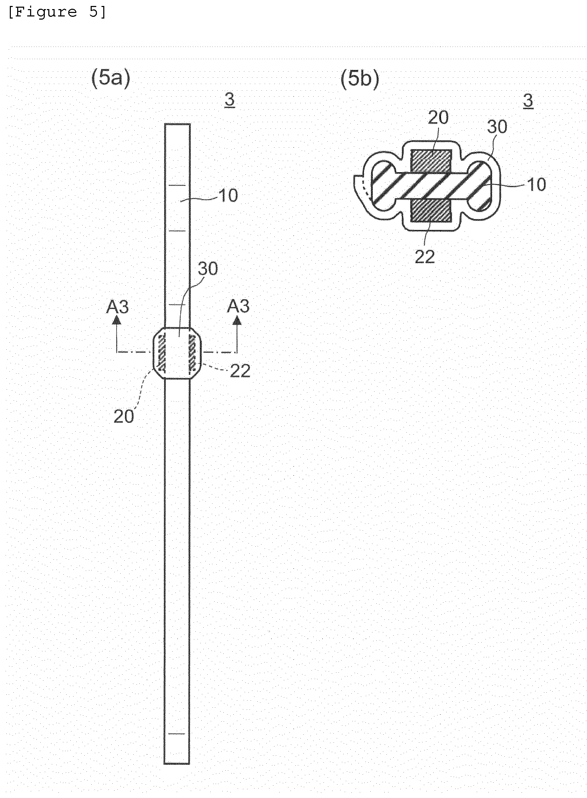

Figure 5 shows a side view (5a) and a sectional view along line A3-A3 (5b) of an RF-tagged tool according to the third example.

An RF-tagged tool 3 according to the third example basically has the same configuration as that of the RF-tagged tool 1 according to the first example, but is different from the RF-tagged tool 1 according to the first example in that a plurality of RF tags 20 and 22 are present.

The RF-tagged tool 3 according to the third example includes two RF tags 20 and 22 in a tool 10 as shown in Figure 5. The number of RF tags 20 and 22 is 2 in the third example, but may be 3 or more. The RF tags 20 and 22 are disposed such that they can transmit radio waves in different directions. Specifically, the RF tags 20 and 22 are disposed on the front side and the back side in the thickness direction of the tool 10. In this way, the RF-tagged tool 3 includes at least two RF tags 20 and 22 different in radio wave transmission direction, whereby reading by a reader becomes easier. In particular, when the tool 10 is a tool made of metal such as iron or iron-based alloy including SUS, the tool 10 itself may act as a radio wave shielding body, thus making it difficult for the reader to perform noncontact communication with the RF tag 20 (or the RF tag 22) .

However, when a plurality of RF tags 20 and 22 are attached to the tool 10 such that they can transmit radio waves in different directions, there may be a situation in which while it is difficult to communicate with one RF tag (e.g. RF tag 20), it is easy to communicate with another RF tag (e.g. RF tag 22). When three or more RF tags are attached to the tool 10, the RF tags may be attached to the tool 10 such that at least two of them transmit radio waves in the same direction as long as the RF tags are attached to the tool 10 such that at least two of them transmit radio waves in different directions. Of course, the RF tags may be attached to the tool 10 such that all of them can transmit radio waves in different directions.

As shown in Figure 5, the RF tags 20 and 22 may be attached on opposite surfaces with the tool 10 held therebetween, or may be attached on the same surface of the tool 10. In this case, the RF tags 20 and 22 are attached to the tool 10 such that they transmit radio waves in different directions.

The Rf-tagged tool 3 may have a sheet 40a interposed between the tool 10 and at least one of the RF tags 20 and 22.

### 2. Method for attaching RF tag to tool

A method for attaching RF tags to tools according to the third example is identical to the foregoing method for attaching RF tags to tools according to the first example or the second example. The method for attaching RF tags to tools according to the third example includes a disposing step of disposing RF tags 20 and 22 on the tool 10; a fixing step of fixing the tool 10 and the RF tags 20 and 22 by covering at least part of the RF tags 20 and 22 with a sheet 30a; and a curing step of curing the sheet 30a to form a self-adhesive silicone rubber bonding member 30. In the method for attaching RF tags to tools according to the third example, the fixing step may include a sticking step of sticking the tool 10 and the RF tags 20 and 22 together by disposing the sheet 40a between the tool 10 and the RF tags 20 and 22; and a winding step of winding a sheet 31a around the tool 10 over the RF tags 20 and 22, the sheet 31a being different from the sheet used in the sticking step.

### 3. Characteristic effect of third example

According to the third example, it is possible to obtain, in addition to the foregoing effects of the first and second examples, a characteristic effect of enabling an RF tag to be easily recognized in a plurality of directions. Thus, even when radio waves from one RF tag (e.g. RF tag 20) cannot be received when a reader is held over the RF-tagged tool 3, it may be possible to receive radio waves from another RF tag 22. Therefore, the success probability is increased in trying to find a missing RF-tagged tool 3.

### (Fourth embodiment)

Next, a fourth embodiment of the present invention will be described. In the fourth embodiment, configurations or steps identical to those in the foregoing embodiments are omitted as appropriate, and differences between the fourth embodiment and the foregoing examples are mainly described.

### 1. RF-tagged tool and method for attaching RF tag to tool

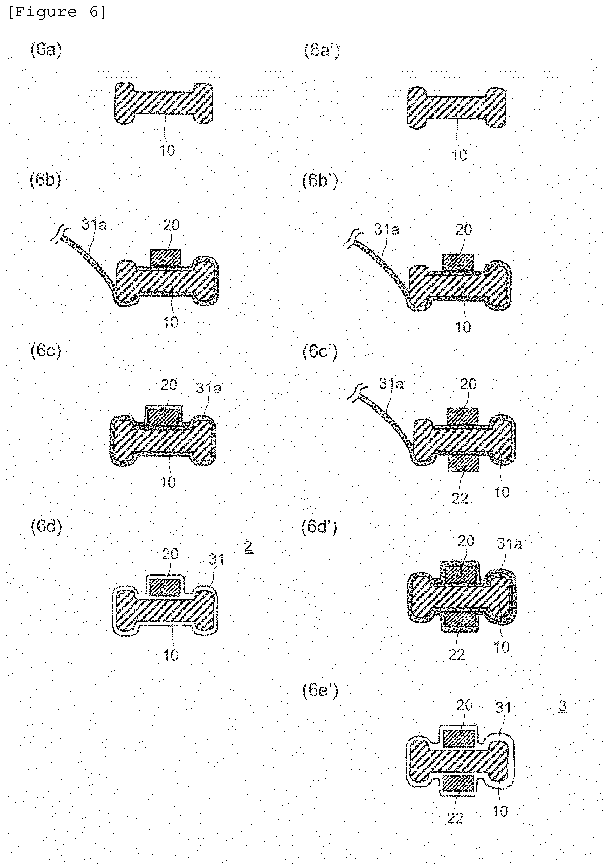

Figure 6 shows a sectional view for illustrating an RF-tagged tool and a method for attaching RF tags to tools according to the fourth embodiment.

In Figure 6, figures (6a), (6b), (6c) and (6d) show a process of fixing one RF tag 20 to a tool 10. Figures (6a'), (6b'), (6c'), (6d') and (6e') show a process of fixing two RF tags 20 and 22 to the tool 10. One sheet 31a is used in both cases where one RF tag 20 is fixed to the tool 10 and where two RF tags 20 and 22 are fixed to the tool 10. In this respect, the fourth embodiment is different from the second and third examples.

First, the process of steps for fixing one RF tag 20 to the tool 10 will be described.

First, the tool 10 is prepared (see Figure 6 (6a)).

Next, a sheet 31a is stuck to a surface of the tool 10, and the RF tag 20 is disposed and stuck on the sheet 31a (sticking step: see Figure 6 (6b)). The sticking step forms part of the fixing step of fixing the RF tag 20 to the tool 10.

Next, the sheet 31a is wound along the periphery of the tool 10 to again cover the surface of the RF tag 20 disposed on the tool 10 (winding step: see Figure 6 (6c)).

Next, the sheet 31a is cured to fixedly attach the RF tag 20 to the tool 10 (curing step: see Figure 6 (6d)). The sheet 31a turns into a first bonding member 31 after curing.

Through the above steps, the RF tag 20 can be attached to the tool 10 to complete an RF-tagged tool 2.

Next, the process of steps for fixing two RF tags 20 and 22 to the tool 10 will be described.

First, the tool 10 is prepared (see Figure 6 (6a')).

Next, the sheet 31a is stuck along the periphery of the tool 10, and the RF tags 20 and 22 are disposed and stuck on the sheet 31a (sticking step: see Figure 6 (6b') and (6c')). The sticking step forms part of the fixing step of fixing the RF tags 20 and 22 to the tool 10.

Next, the sheet 31a is further wound along the periphery of the tool 10 to again cover the surfaces of the RF tags 20 and 22 disposed on the tool 10 (winding step: see Figure 6 (6d')).

Next, the sheet 31a is cured to fixedly attach the RF tags 20 and 22 to the tool 10 (curing step: see Figure 6 (6e')). The sheet 31a turns into the first bonding member 31 after curing.

Through the above steps, the RF tags 20 and 22 can be attached to the tool 10 to complete an RF-tagged tool 3.

### 2. Characteristic effect of fourth embodiment

According to this embodiment, it is possible to further enhance the foregoing effect of the second example or the third example, or exhibit another effect. In the fourth embodiment, the RF tags 20 and 22 are fixed to the tool 10 in a state of being enveloped with the first bonding member 31 without contacting the tool 10. In the second and third examples, the RF tags 20 and 22 are fixed to the tool 10 in a state of being enveloped with the first bonding member 31 and the second bonding member 40 without contacting the tool 10. In the method for attaching RF tags to tools according to the fourth embodiment, the sticking step and the winding step are carried out using one sheet 31a (uncured self-adhesive silicone rubber sheet). The fourth embodiment in which the self-adhesive silicone rubber bonding member for fixing the RF tags 20 and 22 is composed of one sheet enables the RF tags 20 and 22 to be more reliably fixed to the tool 10. It is more efficient to fix the RF tags 20 and 22 to the tool 10 with one sheet 31a.

### (Other embodiments)

While the present invention has been described on the basis of embodiments above, the present invention is not limited to the above-described embodiments, and can be carried out in various aspects without departing from the scope of the invention defined by the claims. For example, the following modifications can be made.

The numbers, shapes, positions, sizes, angles and the like of constituent elements described in the embodiments and the drawings are illustrative, and can be changed as long as the effects of the present invention are not impaired. In the third embodiment, two RF tags 20 and 22 are identical in type, but the present invention is not limited thereto. All or some of a plurality of RF tags may be different in type.

### Industrial Applicability

The present invention is applicable in all industries where tools are produced or used.

## Claims

1. An RF-tagged tool (3) comprising:
a tool (10);
an RF tag (20); and
a cured self-adhesive silicone rubber bonding member (31a)
**characterized in that** the self-adhesive silicone rubber bonding member (31a) is disposed between the RF tag (20) and the tool (10) and is wound around the tool (10) over the RF tag (20).

2. The RF-tagged tool (3) of claim 1, comprising at least two of the RF tags (20, 22) different in radio wave transmission direction.

3. A method for attaching RF tags (20,22) to tools (10), comprising:
fixing a tool (10) and an RF tag (20, 22) **characterized by** sticking the tool (10) and the RF tag (20, 22) together by disposing the uncured self-adhesive silicone rubber sheet (31a) between the tool (10) and the RF tag (20, 22); and
winding the uncured self-adhesive silicone rubber sheet (31a) around the tool over the RF tag. and
curing the self-adhesive silicone rubber sheet (31a) to form a self-adhesive silicone rubber bonding member (31),

4. The method for attaching RF tags (20, 22) to tools of claim 3, wherein at least two of the RF tags (20, 22) different in radio wave transmission direction are attached to the tool (10).

## Patentansprüche

1. RF-gekennzeichnetes Werkzeug, aufweisend:
ein Werkzeug (10);
ein RF-Etikett (20); und
ein gehärtetes
selbstklebendes Silikongummi-Verbindungselement (31a),
**dadurch gekennzeichnet, dass** das selbstklebende Silikongummi-Verbindungselement (31a) zwischen dem RF-Etikett (20) und dem Werkzeug (10) angeordnet ist und über dem RF-Etikett (20) um das Werkzeug (10) gewickelt ist.

2. RF-gekennzeichnetes Werkzeug nach Anspruch 1, aufweisend mindestens zwei der RF-Etiketten (20, 22), die sich in der Funkwellenübertragungsrichtung unterscheiden.

3. Verfahren zum Anbringen von RF-Etiketten (20, 22) an Werkzeugen (10), aufweisend:
Befestigen eines Werkzeugs (10) und eines RF-Etiketten (20, 22), **gekennzeichnet durch**
Zusammenkleben des Werkzeugs (10) und des RF-Etiketts (20, 22) durch Anordnen der ungehärteten selbstklebenden Silikongummifolie (31a) zwischen dem Werkzeug (10) und dem RF-Etikett (20, 22); und
Wickeln der ungehärteten selbstklebenden Silikongummifolie (31a) um das Werkzeug über das RF-Etikett, und
Aushärten der selbstklebenden Silikongummifolie (31a), um ein selbstklebendes Silikongummi-Verbindungselement (31) zu bilden.

4. Verfahren zum Anbringen von RF-Etiketten (20, 22) an Werkzeugen nach Anspruch 3, wobei mindestens zwei der RF-Etiketten (20, 22), die sich in der Funkwellenübertragungsrichtung unterscheiden, an dem Werkzeug (10) angebracht werden.

## Revendications

1. Un outil marqué RF comprenant :
un outil (10);
une étiquette RF (20) ; et
élément de liaison en caoutchouc de silicone auto-adhésif (31a) durci
**caractérisé en ce que** l'élément de liaison en caoutchouc de silicone auto-adhésif (31a) est disposé entre l'étiquette RF (20) et l'outil (10) et est enroulé autour de l'outil (10) sur l'étiquette RF (20)

2. L'outil à marqué RF conformément à la Revendication 1, comprenant au moins deux des étiquettes RF (20, 22) ayant des différences de la direction de transmission des ondes radio.

3. Un procédé pour attacher des étiquettes RF (20, 22) à des outils (10), comprenant les étapes de :
fixation d'un outil (10) et d'une étiquette RF (20, 22) **caractérisée par**
collage d'un outil (10) et d'une étiquette RF (20, 22) en disposant la feuille de caoutchouc de silicone auto-adhésif non durcie (31a) entre l'outil (10) et l'étiquette RF (20, 22); et
enroulage de la feuille de caoutchouc de silicone auto-adhésif non durcie (31a) autour de l'outil sur l'étiquette RF, et
durcissement de la feuille de caoutchouc de silicone auto-adhésif (31a) pour former un élément de liaison en caoutchouc de silicone auto-adhésif (31)

4. Le procédé pour attacher des étiquettes RF (20, 22) à des outils conformément à la Revendication 3, dans lequel au moins deux des étiquettes RF (20, 22) ayant des différences de direction de transmission d'ondes radio sont attachées à l'outil (10).
